# EUROPÄISCHE PATENTSCHRIFT

(11) **EP 1 800 456 B1**
(45) Veröffentlichungstag und Bekanntmachung des Hinweises auf die Patenterteilung: **15.01.2014**
(21) Anmeldenummer: 04791205.0
(22) Anmeldetag: 12.10.2004
(51) Int. Cl.: H04L 29/08

(54) **VERFAHREN UND SYSTEM ZUR AUTOMATISIERTEN ANPASSUNG EINES DIENSTPARAMETERS**
METHOD AND SYSTEM FOR THE AUTOMATIC ADAPTATION OF A SERVICE PARAMETER
PROCEDE ET SYSTEME POUR AJUSTER DE MANIERE AUTOMATIQUE UN PARAMETRE DE SERVICES

(43) Veröffentlichungstag der Anmeldung: 27.06.2007
(73) Patentinhaber: Swisscom AG, 3050 Bern (CH)
(72) Erfinder: RIORDAN, John, Bern, 3006 (CH); SCHÜRCH, Urs, Heimberg, 3627 (CH); JAKOB, Thomas, Palo Alto, California 94304 (US)
(74) Vertreter: BOVARD AG
(86) Internationale Anmeldenummer: PCT/EP2004/052513
(87) Internationale Veröffentlichungsnummer: WO 2006/039944

(56) Entgegenhaltungen:
- WO-A-01/11845
- WO-A-2004/059996
- US-A1- 2001 050 943

## Beschreibung

Die vorliegende Erfindung bezieht sich auf ein Verfahren und ein System zur automatisierten Anpassung eines Dienstparameters eines Dienstes aufgrund biometrischer Daten und/oder Umgebungsdaten.

Das Angebot von Dienstleistungen, einschliesslich beispielsweise medizinischer Dienste, Support-Diensten, Telefonverkaufsdiensten oder Auktionen, welche über Telekommunikationsnetzwerke angeboten, gewählt und benutzt werden, hat sich in den letzten Jahren stürmisch entwickelt. Ein bedeutender Anteil von Dienstleistungen wie auch von Kaufverträgen wird heute mittels Kommunikations-Endgeräten wie Telefon, Mobilfunktelefon, Personal Computer (PC), Fax, Modem usw. über Telekommunikations-Verbindungen abgeschlossen bzw. abgewickelt, ohne dass sich Anbieter und Abnehmer der Dienstleistung gleichzeitig an demselben Standort aufhalten müssen.

Neben vielen Vorteilen ist das Anbieten von Dienstleistungen auch mit Nachteilen verbunden. Ein Nachteil ist es, dass es für den Anbieter einer Dienstleistung sehr schwierig sein kann, den körperlichen oder geistigen Zustand eines Abnehmers der Dienstleistung nur über eine sprachliche Kommunikation mit dem Abnehmer zu beurteilen. Es ist weiter ein Nachteil, dass es für den Anbieter einer Dienstleistung sehr schwierig sein kann, die Umgebung eines Abnehmers der Dienstleistung nur über sprachliche Mittel zu beurteilen. Diese Nachteile führen dazu, dass Dienstparameter eines Dienstes oft nicht an den Zustand oder die Umgebung eines Abnehmers einer Dienstleistung angepasst sind. Diese Nachteile führen auch dazu, dass Dienstparameter eines Dienstes oft nicht automatisiert anpassbar sind. Beispiele solcher Situationen sind unter anderem folgende:
1. Bei medizinischen Diensten (Notfall, Ambulanz) sollte derjenigen Person zuerst geholfen werden, welche die Hilfe am nötigsten hat. Der medizinische Dienst sollte zum Beispiel durch die automatisierte Zuordnung eines kompetenten Facharztes möglichst schnell und gut an den Zustand und die Bedürfnisse einer Person anpassbar sein.
2. Angebote von Musik- oder Videoaufzeichnungen sollten dem Zustand des Abnehmers angepasst sein.
3. Eine Überprüfung einer Bestellung sollte in dem Sinne möglich sein, dass der Gesundheits- oder Geisteszustand des Bestellers in Betracht gezogen werden kann.
4. Eine Telekommunikationsverbindung zwischen zwei (oder mehreren) Teilnehmern sollte nur dann aufgebaut werden, falls der Gesundheits- oder Geisteszustand der Teilnehmer dies erlaubt.

Es sind bereits Verfahren und Systeme zur Übermittlung biometrischer Daten über ein Telekommunikationsnetz bekannt geworden.

So beschreibt die veröffentlichte US-Patentanmeldung Nr. US 2003/0101078 ein System zur zentralen Fernüberwachung von Patienten, wobei das System computergestützte Vorrichtungen zur Überwachung von physiologischen Daten wie Puls, Blutdruck, Blutzuckerwerte u.a. und zur Auswertung der Daten aufweist. Weiterhin ist eine Fernübermittlung zu einer Zentrale vorgesehen, welche selbsttätig Massnahmen ergreifen kann, die bei kritischen Situationen erforderlich werden, z.B. das Herbeirufen einer Ambulanz. Die in der Patentanmeldung US 2003/0101078 beschriebene Lösung hat jedoch den Nachteil, dass keine automatisierte Anpassung eines Dienstparameters eines Dienstes aufgrund biometrischer Daten und/oder von Umgebungsdaten ermöglicht wird.

Auf ähnliche Weise werden in den Dokumenten US 2003/0009088, WO 01/15056 und DE 100 42 101 A1 zentrale Überwachungssysteme beschrieben, wobei biologische Informationen einer Person von einem Gerät, das am Körper getragen wird, gemessen, gespeichert und über ein Kommunikationsendgerät an eine Zentrale übermittelt werden, welche in kritischen Situationen den Patienten und/oder über eine Fernverbindung den Arzt informiert. Die in diesen Dokumenten beschriebenen Lösungen haben jedoch wiederum den Nachteil, dass keine automatisierte Anpassung eines Dienstparameters eines Dienstes aufgrund biometrischer Daten und/oder von Umgebungsdaten ermöglicht wird.

Das Dokument WO 01/29708 beschreibt ein System, das die Aufgabe hat, einen potenziellen Verbraucher, der die Dienste eines Experten benötigt, z.B. auf medizinischem Gebiet, und einen entsprechend qualifizierten Experten über das Internet möglichst schnell zusammenzuführen. Dabei liefern die Experten Daten ihrer Qualifikationen an eine Datenbank, und der Klient, der einen Experten sucht, spezifiziert auf ähnliche Weise seine Wünsche. Die Datenbank erledigt das Zusammenbringen von Klient und Experte. Diese Lösung hat unter anderem den Nachteil, dass es für einen Klienten ohne Expertenwissen sehr schwierig ist, genaue medizinische Daten zur Suche eines geeigneten Experten zu liefern.

US2001/050943 offenbart ein Datenkommunikationssystem mit adaptiven Kommunikationsparametern, wobei Übertragungen ausgewertet werden und, basiert auf den Auswertungsresultaten, Betriebsparameter angepasst werden können.

Es ist daher eine Aufgabe der Erfindung, ein neues und besseres Verfahren sowie ein System zur automatisierten Anpassung von mindestens einem Dienstparameter eines Dienstes vorzuschlagen, wobei der mindestens eine Dienstparameter automatisiert aufgrund biometrischer Daten und/oder Umgebungsdaten des Teilnehmers angepasst wird.

Gemäss der vorliegenden Erfindung wird dieses Ziel insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mittels Sensoren biometrische Daten und/oder Umgebungsdaten eines Teilnehmers bestimmt werden, dass genannte Daten mittels eines Auswertungsmoduls ausgewertet werden, und dass basierend auf Daten des Auswertungsmoduls der mindestens eine Dienstparameter des Dienstes angepasst wird, wobei Dienste, welche mindestens einen Dienstparameter umfassen, von mit einem Telekommunikationsnetz verbundenen Dienstzentralen angeboten werden und von Teilnehmern in diesem Telekommunikationsnetz gewählt und benutzt werden. Ein solches Verfahren hat unter anderem den Vorteil, dass mindestens ein Dienstparameter des von einem Teilnehmer gewählten Dienstes automatisiert entsprechend biometrischer Daten und/oder entsprechend Umgebungsdaten des Teilnehmers angepasst wird.

In einer Ausführungsvariante werden die genannten Daten von einem Auswertungsmodul eines Telekommunikationsendgeräts ausgewertet, wobei ein Parametermodul des Telekommunikationsendgeräts basierend auf Daten des Auswertungsmoduls den mindestens einen Dienstparameter des Dienstes anpasst. Ein solches Verfahren hat unter anderem den Vorteil, dass die automatisierte Anpassung eines Dienstparameters mittels eines Telekommunikationsendgeräts durchführbar ist.

In einer Ausführungsvariante werden die genannten Daten von einem Auswertungsmodul einer Dienstzentrale ausgewertet, wobei ein Parametermodul der Dienstzentrale basierend auf Daten des Auswertungsmoduls den mindestens einen Dienstparameter des Dienstes anpasst. Ein solches Verfahren hat unter anderem den Vorteil, dass die automatisierte Anpassung eines Dienstparameters mittels einer Dienstzentrale durchführbar ist.

In einer Ausführungsvariante werden die genannten Daten von einem Auswertungsmodul einer Vermittlungszentrale ausgewertet, wobei ein Parametermodul der Vermittlungszentrale basierend auf Daten des Auswertungsmoduls den mindestens einen Dienstparameter des Dienstes anpasst. Ein solches Verfahren hat unter anderem den Vorteil, dass die automatisierte Anpassung eines Dienstparameters mittels einer Vermittlungszentrale durchführbar ist.

In einer Ausführungsvariante werden durch den Dienstparameter eine bestimmbare Fachperson oder Fachpersonengruppe und/oder eine bestimmbare Dienstprioriät und/oder bestimmbare Dienstkosten und/oder eine bestimmbare Dienstqualität festgelegt.

In einer Ausführungsvariante werden biometrische Daten bezüglich elektromagnetischer Körperfelder und/oder bezüglich biochemischer Zusammensetzung von Substanzen der Körperhautoberfläche und/oder bezüglich biochemischer Zusammensetzung von Körperflüssigkeiten und/oder bezüglich der Aktivität von Körperorganen bestimmt. Ein solches Verfahren hat unter anderem den Vorteil, dass der allgemeine körperliche bzw. physische und geistige bzw. psychische Zustand des Teilnehmers bestimmbar ist.

In einer Ausführungsvariante werden Umgebungsdaten bezüglich Umgebungstemperatur und/oder bezüglich chemischer Parameter der Umgebungsluft und/oder bezüglich des Umgebungsluftdrucks und/oder bezüglich des Umgebungsstandorts und/oder bezüglich Schallwellen der Umgebung und/oder bezüglich Lichtwellen der Umgebung bestimmt. Ein solches Verfahren hat unter anderem den Vorteil, dass der allgemeine Umgebungszustand des Teilnehmers bestimmbar ist.

In einer Ausführungsvariante werden biometrische Daten und/oder Umgebungsdaten zu bestimmbaren Zeitpunkten und/oder nach Ablauf von bestimmbaren Zeitintervallen bestimmt. Ein solches Verfahren hat unter anderem den Vorteil, dass der mindestens eine Dienstparameter des Dienstes an aktuelle biometrische Daten und/oder Umgebungsdaten anpassbar ist.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figur illustriert:

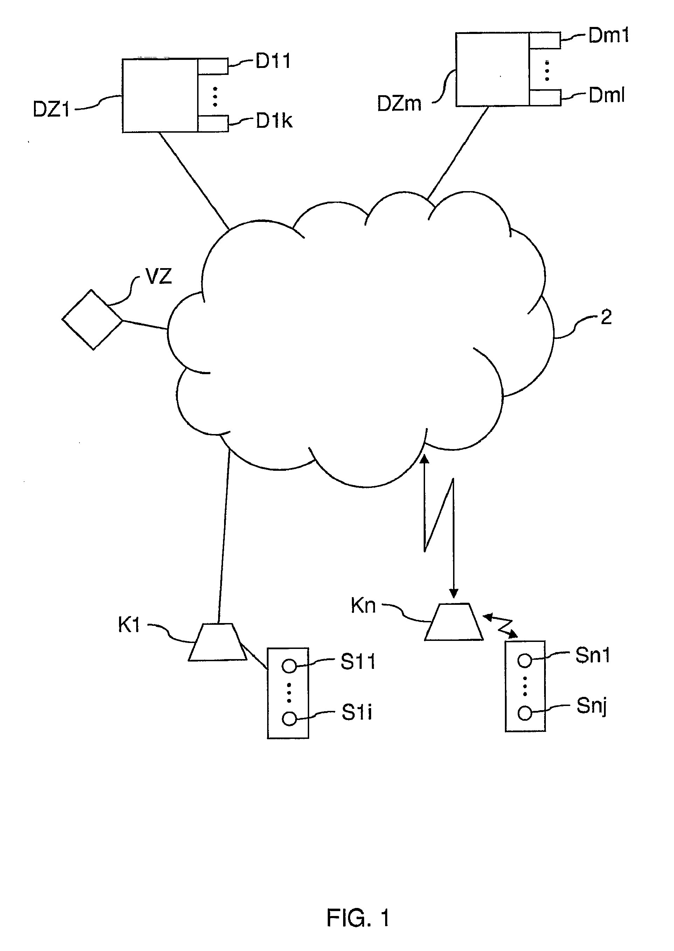

Figur 1 zeigt schematisch eine Systemanordnung, welche zur Durchführung des erfindungsgemässen Verfahrens geeignet ist.

In Figur 1 beziehen sich die Bezugszeichen K1 und Kn auf eine beliebige Anzahl Kommunikationsendgeräte, beispielsweise mobile oder fest installierte Telefongeräte und/oder mobile oder fest installierte Computer, welche an ein Telekommunikationsnetz 2 anschliessbar sind und von Teilnehmern des Telekommunikationsnetzes 2 benutzbar sind. Das Telekommunikationsnetz 2 umfasst beispielsweise das Internet und/oder das öffentliche geschaltete Telefonnetz (Public Switched Telephone Network, PSTN), welches Telefonnetz seinerseits ISDN-Netze (Integrated Services Digital Network) und Mobilnetze, zum Beispiel gemäss dem GSM- oder UMTS-Standard, umfassen kann und welches beispielsweise auch über SS7 (Signalisation System Number 7) Signalisierungsdienste verfügen kann. Die Bezugszeichen S11 und S1i sowie Sn1 und Snj beziehen sich auf eine beliebige Anzahl von den Kommunikationsendgeräten K1 und Kn zugeordneten Sensoren zur Bestimmung von biometrischen Daten und/oder von Umgebungsdaten. Die Sensoren S11 und S1i sowie Sn1 und Snj können am Körper und/oder irgendwo in der Umgebung eines Teilnehmers des Telekommunikationsnetzes 2 angebracht sein. Die Sensoren S11 und S1i sowie Sn1 und Snj erfassen biometrische Daten und/oder Umgebungsdaten dieser Teilnehmer, wie beispielsweise die Körpertemperatur, den Blutdruck, die Pulsfrequenz, den Blutzuckerspiegel, die Sauerstoffkonzentration des Bluts, den Adrenalinspiegel, den Blutalkoholspiegel, die Konzentration bestimmbarer Medikamente, Narkotika oder Drogen, die Aktivität von Muskeln oder Körperorganen, die Aktivität von Hirnströmen und/oder die Lufttemperatur, den Luftdruck, den Geräuschpegel und/oder die Helligkeit der Umgebung. Die genannten Sensoren können beispielsweise auch die Körperlage (Liegen, Sitzen, Stehen, usw.) oder die Bewegungsaktivität (Ruhen, Gehen, Rennen, usw.) eines Teilnehmers des Telekommunikationsnetzes 2 bestimmen. Die Sensoren S11 und S1i sowie Sn1 und Snj umfassen beispielsweise Elektroden, Mikrophone, Temperaturfühler, Luftdruckfühler und/oder irgendwelche andere Sensoren zur Erfassung von biometrischer Daten und/oder Umgebungsdaten. Die von den Sensoren S11 und S1i sowie Sn1 und Snj bestimmten Daten können von irgendeinem geeigneten Gerät, beispielsweise von einem Messdatenlogger, in eine für die weitere Verwendung geeignete Datenform abgebildet werden, an geeignete Geräte, beispielsweise an das Kommunikationsendgerät K1 und Kn, übermittelt werden, wobei die Übermittlung von Daten über irgendeine geeignete Schnittstelle, beispielsweise eine kontaktlose Schnittstelle, erfolgt, und/oder in einem geeigneten Modul, beispielsweise in einem Chipkartenspeicher, abgespeichert werden. Zur einfacheren Verwendung können die Sensoren in einem oder mehreren Geräten, wie beispielsweise einer Armbanduhr, einem Gürtel, einem Fingerring, einem Mobilfunktelefon oder einem PDA (Personal Digital Assistant) angebracht sein. Die von den Sensoren S11 und S1i sowie Sn1 und Snj bestimmten Daten können zu bestimmbaren Zeitpunkten, beispielsweise zu jeder vollen Minute oder beim Aufbau einer Verbindung mit einer Dienstzentrale, und/oder nach Ablauf eines bestimmbaren Zeitintervalls, beispielsweise jede Sekunde, bestimmt werden.

In Figur 1 beziehen sich die Bezugszeichen DZ1 und DZm auf eine beliebige Anzahl von Dienstzentralen, welche mit dem Telekommunikationsnetz 2 verbunden sind. Die Dienstzentralen umfassen beispielsweise medizinische Dienste, wie beispielsweise einen Notarztdienst, einen medizinischen Beratungsdienst oder einen psychologischen Beratungsdienst, Rettungs- oder Notfalldienste, wie beispielsweise einen Feuerwehrdienst oder einen Polizeidienst, einen Unterhaltungsdienst, wie beispielsweise einen Sendedienst für Musik oder Videodarbietungen, oder irgendeinen Bestelldienst für Produkte oder Dienstleistungen, wie beispielsweise einen Medikamentenversanddienst oder ein Dienst für die Buchung von Ferienreisen. Die Dienstzentralen DZ1 und DZm verfügen über eine beliebige Anzahl von Dienstparametern D11 und D1 k sowie Dm1 und Dml. Einem bestimmbaren Dienstparameter oder einer Kombination von bestimmbaren Dienstparametern kann irgendein Dienstverhalten zugeordnet sein. Durch einen bestimmbaren Dienstparameter kann beispielsweise festgelegt sein, dass ein Anruf an eine bestimmbare Fachperson oder Fachpersonengruppe weitergeleitet wird, dass ein Anruf mit einer bestimmbaren Priorität entgegengenommen wird, dass ein Anruf mit bestimmbaren Kosten abgerechnet wird oder dass eine bestimmbare Qualität des Dienstes angeboten wird.

In Figur 1 bezieht sich das Bezugszeichen VZ auf eine mit dem Telekommunikationsnetz 2 verbundene Vermittlungszentrale. Die Vermittlungszentrale VZ vermittelt Anrufe zwischen Teilnehmern des Telekommunikationsnetzwerks 2, wobei die Vermittlung eines Anrufs auf biometrischen Daten und/oder Umgebungsdaten beider Teilnehmer oder eines Teilnehmers basiert.

Je nach Art der beabsichtigten Dienstleistung ist in der Regel nur eine Auswahl bestimmter, für diese Dienstleistung wichtiger oder interessierender biometrischer Daten und/oder Umgebungsdaten zu übermitteln. Beispielsweise ist beim Wählen eines anderen Teilnehmers am Telefon normalerweise nicht zu prüfen, ob der wählende Teilnehmer liegt oder steht. Andererseits wäre es bei einem Notfall, beispielsweise einem Herzschwächeanfall, unter anderem wertvoll zu wissen, ob der Anrufende liegt.

Abhängig vom allgemeinen körperlichen und/oder geistigen Zustand des Teilnehmers werden die Geräte und Einrichtungen, welche biometrische Daten und/oder Umgebungsdaten bestimmen und diese in übermittelbare Daten umwandeln, und auch die Vorrichtungen zur Übermittlung der genannten Daten über Telekommunikationssysteme dem jeweiligen Fall angepasst. Personen, bei denen beispielsweise eine akute Möglichkeit besteht, dass sie gegebenenfalls schnelle Hilfe benötigen, werden ein entsprechendes Gerät am Körper tragen. In anderen Fällen wird es ausreichen, Einrichtungen zur Messung zu verwenden, die nicht in direktem Kontakt mit dem Teilnehmer stehen. Alle diese Geräte und Einrichtungen sind an sich bekannt und dem Fachmann zugänglich und sollen in diesem Dokument nicht mehr weiter beschrieben werden.

Es sollen nun im Einzelnen als nicht einschränkende Beispiele einige Fälle besprochen werden, bei denen das erfindungsgemässe Verfahren mit Vorteil Anwendung finden kann.
1. Wird beim Anruf eines Teilnehmers, der eine Dienstleistung verlangt, beispielsweise eine wie auch immer geartete Hilfeleistung (Stromausfall, Wassereinbruch etc.), festgestellt, dass der Teilnehmer unter hohem geistigen und/oder physischen Stress steht, so kann diesem Teilnehmer der sofortige Vorrang vor anderen, weniger belasteten Teilnehmern gegeben werden.
2. Beim Vorliegen eines Anrufs bezüglich einer medizinischen oder psychologischen Dienstleistung kann der Anruf ohne Rückfrage sofort an den richtigen Anbieter (Arzt, Chirurg, Krankenhaus, Psychiater, Sozialhelfer) weitergeleitet werden, der auch gleichzeitig Daten über den vorliegenden Fall erhalten kann.
3. Wenn ein Teilnehmer aufgrund einer emotionellen Stress-Situation anruft, so kann er automatisch (aufgrund der übermittelten Daten, beispielsweise der Herzfrequenz und/oder dem Blutdruck) mit einem Therapeuten verbunden werden, der den Teilnehmer beruhigt. Umgekehrt werden depressive Teilnehmer mit Spezialisten verbunden, welche in der Lage sind, Depressionen durch Zuspruch und Aufmunterung über eine Telekommunikation zu behandeln.
4. Unterhaltungsdienste, beispielsweise die Sendungen von Musik oder Videodarbietungen, können in Kenntnis der Teilnehmerdaten bezüglich persönlicher Vorlieben passend angeboten und ausgeführt werden. Werbung über Ton und/oder Bild kann an persönliche Daten des Teilnehmers angepasst werden. Beispielsweise können Teilnehmern, die an chronischen Kopfschmerzen, Angstzuständen, Depressionen usw. leiden, passende oder auch neue Medikamente, auch aus der Parapharmazie, angeboten werden.
5. Die Tarifgestaltung für Dienstleistungen, insbesondere für Telekommunikationsdienste, kann (gegebenenfalls unter Berücksichtigung von deren Umfang und Qualität) an den physischen und psychischen Zustand des Teilnehmers angepasst werden. Dabei können u.a. folgende Kriterien angewandt werden: Umfang der Dienstleistung, die der Teilnehmer mit dem gleichen physischen und psychischen Zustand zuvor verlangt und erhalten hat; Inanspruchnahme dieser Dienstleistungen von anderen Teilnehmern mit dem gleichen physischen und psychischen Zustand, usw.
6. Vereinbarungen, Bestellungen für Produkte und Dienstleistungen über die Telekommunikation werden nur angenommen bzw. ausgeführt, wenn sich der Teilnehmer im Vollbesitz seiner Verantwortung befindet und seine Daten insbesondere einem niedrigen Alkohol- und Medikamentenspiegel (z.B. Drogenspiegel) im Blut zugeordnet sind und der Teilnehmer weder übermüdet noch depressiv ist.
7. Telekommunikationen zwischen zwei Teilnehmern können ebenfalls auf die Daten gestützt werden, die beim erfindungsgemässen Verfahren verwendet werden. Es können zum Beispiel zwei Teilnehmer (die dies wünschen) nur dann miteinander verbunden werden, wenn beide zum Austausch von Informationen aufgrund passender physischer und psychischer Zustände bereit sind. Unter Verwendung einer Vermittlungszentrale VZ ist folgender Ablauf vorstellbar:
   A) Teilnehmer A wählt einen Anruf, der eine Verbindung mit Teilnehmer B verlangt.
   B) Die Vermittlungszentrale VZ nimmt den Anruf von A entgegen und vergleicht die (gleichzeitig) übermittelten Teilnehmerdaten mit Vorgabedaten, die für den Teilnehmer B gespeichert sind.
   C) Das System vergleicht die Teilnehmerdaten A mit den Vorgabedaten des Teilnehmers B. Wenn der Vergleich positiv ausfällt, d.h. wenn die Daten A innerhalb gewisser, vorbestimmter Grenzen mit den Daten B übereinstimmen, wird die Verbindung aufgebaut. Ist dies nicht der Fall, kommt keine Verbindung zustande.
   D) Das System setzt den Teilnehmer A in Kenntnis, wenn eine Verbindung nicht aufgebaut wird, und stellt ihm frei, zu einem anderen, späteren Zeitpunkt seine Anfrage zu erneuern. Gleichzeitig kann auch, wenn verlangt, der Teilnehmer B vom nicht zustande gekommenen Anruf des Teilnehmers A in Kenntnis gesetzt werden, so dass Teilnehmer B seinerseits zu einem bestimmten Zeitpunkt einen Anruf einleiten kann.

Diese Beispiele lassen sich weiter ergänzen.

Beim erfindungsgemässen Verfahren ist vorzugsweise vorgesehen, dass die übermittelten Werte und auch entsprechende Normalwerte des jeweiligen Teilnehmers beim Anbieter, beispielsweise in einer Dienstzentrale DZ1 und DZm, gespeichert werden, damit durch einen Vergleich der betreffenden, zugehörigen Werte eine Entscheidung möglich wird, ob die jeweils übermittelten Werte normale bzw. akzeptable Werte oder aber derart erhöhte Werte sind, welche die Ausführung der verlangten Dienstleistung nach Massgabe der Entscheidung des Anbieter verhindern. Dabei werden bevorzugt auch Grenzwerte definiert und gespeichert, innerhalb derer die Normalwerte als gültig angesehen werden.

Es ist bevorzugt, dass ein entsprechendes, gespeichertes Programm diese Entscheidung entweder selbst trifft oder, meist in Sonderfällen, einer Kontrollstelle zur Zulassung oder Ablehnung zuleitet. Diese Kontrollstelle kann eine Person sein, aber auch ein weiteres Programm, das vorzugsweise laufend an Daten angepasst wird, die vom Teilnehmer übermittelt werden und/oder mit dem Teilnehmer vereinbart werden.

Das erfindungsgemässe System wird aus an sich bekannten Einheiten und Baugruppen aufgebaut und zeichnet sich insbesondere durch eine erfinderische Zusammenschaltung auf.

Das gezeigte und beschriebene System kann vielfältig abgewandelt und vervollständigt sowie der technischen Entwicklung angepasst werden, ohne dass der Geltungsbereich der Erfindung, der durch die Ansprüche definiert ist, verlassen wird.

Selbstverständlich wird eine Übermittlung und eventuelle Speicherung von Daten, welche im Rahmen des vorliegenden Verfahrens vom Teilnehmer erzeugt und übermittelt werden, nur mit seinem Einverständnis vorgenommen. Ein solches Einverständnis kann in Form eines Zertifikates beispielsweise im Auswertungsmodul gespeichert werden, und es kann eine begrenzte Gültigkeitsdauer aufweisen, nach deren Ablauf das Zugriffsrecht auf persönliche Daten erlischt. Dies ist jedoch nicht Gegenstand der vorliegenden Erfindung, sondern der jeweilig geltenden Gesetze und Vorschriften.

## Patentansprüche

1. Verfahren zur automatisierten Anpassung von mindestens einem Dienstparameter (D11...D1k, Dm1...Dml) eines Dienstes, welcher in einem Telekommunikationsnetz (2) von einer mit diesem Telekommunikationsnetz verbundenen Dienstzentrale (DZ1, DZm) angeboten und von Teilnehmern in diesem Telekommunikationsnetz gewählt und benützt wird, **dadurch gekennzeichnet,**
**dass** mittels Sensoren (S11...S1i, Sn1...Snj) biometrische Daten und/oder Umgebungsdaten eines Teilnehmers bestimmt werden,
**dass** genannte Daten mittels eines Auswertungsmoduls ausgewertet werden, und
**dass** basierend auf Daten des Auswertungsmoduls der mindestens eine Dienstparameter des Dienstes angepasst wird.

2. Verfahren nach Anspruch 1, **dadurch gekennzeichnet, dass** genannte Daten von einem Auswertungsmodul eines Telekommunikationsendgeräts (K1, Kn) ausgewertet werden und dass ein Parametermodul des Telekommunikationsendgeräts basierend auf Daten des Auswertungsmoduls den mindestens einen Dienstparameter des Dienstes anpasst.

3. Verfahren nach einem der Ansprüche 1 bis 2, **dadurch gekennzeichnet, dass** genannte Daten von einem Auswertungsmodul einer Dienstzentrale ausgewertet werden und dass ein Parametermodul der Dienstzentrale basierend auf Daten des Auswertungsmoduls den mindestens einen Dienstparameter des Dienstes anpasst.

4. Verfahren nach einem der Ansprüche 1 bis 3, **dadurch gekennzeichnet, dass** genannte Daten von einem Auswertungsmodul einer Vermittlungszentrale ausgewertet werden und dass ein Parametermodul der Vermittlungszentrale basierend auf Daten des Auswertungsmoduls den mindestens einen Dienstparameter des Dienstes anpasst.

5. Verfahren nach einem der Ansprüche 1 bis 4, **dadurch gekennzeichnet, dass** durch den Dienstparameter eine bestimmbare Fachperson oder Fachpersonengruppe und/oder eine bestimmbare Dienstprioriät und/oder bestimmbare Dienstkosten und/oder eine bestimmbare Dienstqualität festgelegt werden.

6. Verfahren nach einem der Ansprüche 1 bis 5, **dadurch gekennzeichnet, dass** biometrische Daten bezüglich elektromagnetischer Körperfelder und/oder bezüglich biochemischer Zusammensetzung von Substanzen der Körperhautoberfläche und/oder bezüglich biochemischer Zusammensetzung von Körperflüssigkeiten und/oder bezüglich der Aktivität von Körperorganen bestimmt werden.

7. Verfahren nach einem der Ansprüche 1 bis 6, **dadurch gekennzeichnet, dass** Umgebungsdaten bezüglich Umgebungstemperatur und/oder bezüglich chemischer Zusammensetzung der Umgebungsluft und/oder bezüglich des Umgebungsluftdrucks und/oder bezüglich des Umgebungsstandorts und/oder bezüglich Schallwellen der Umgebung und/oder bezüglich Lichtwellen der Umgebung bestimmt werden.

8. Verfahren nach einem der Ansprüche 1 bis 7, **dadurch gekennzeichnet, dass** biometrische Daten und/oder Umgebungsdaten zu bestimmbaren Zeitpunkten und/oder nach Ablauf von bestimmbaren Zeitintervallen bestimmt werden.

9. Telekommunikationssystem zur automatisierten Anpassung von mindestens einem Dienstparameter (D11...D1k, Dm1...Dml) eines Dienstes, wobei ein Dienst in einem Telekommunikationsnetz (DZ1, DZm) von einer mit diesem Telekommunikationsnetz verbundenen Dienstzentrale (DZ1, DZm) angeboten und von Teilnehmern in diesem Telekommunikationsnetz mittels einem Telekommunikationsendgerät gewählt und benützt wird, **dadurch gekennzeichnet,**
**dass** dem Telekommunikationsendgerät Sensoren (S11...S1i, Sn1...Snj) zur Bestimmung von biometrischen Daten und/oder Umgebungsdaten eines Teilnehmers zugeordnet sind,
**dass** das Telekommunikationssystem ein Auswertungsmodul zur Auswertung der genannten Daten umfasst, und
**dass** das Telekommunikationssystem ein Parametermodul zur Anpassung von mindestens einem Dienstparameter (D11...D1k, Dm1...Dml) des Dienstes umfasst.

10. Telekommunikationssystem nach Anspruch 9, **dadurch gekennzeichnet, dass** ein Telekommunikationsendgerät ein Auswertungsmodul zur Auswertung von biometrischen Daten und/oder Umgebungsdaten und ein Parametermodul zur Anpassung von mindestens einem Dienstparameter des Dienstes umfasst.

11. Telekommunikationssystem nach einem der Ansprüche 9 bis 10, **dadurch gekennzeichnet, dass** eine Dienstzentrale ein Auswertungsmodul zur Auswertung von biometrischen Daten und/oder Umgebungsdaten und ein Parametermodul zur Anpassung von mindestens einem Dienstparameter des Dienstes umfasst.

12. Telekommunikationssystem nach einem der Ansprüche 9 bis 11, **dadurch gekennzeichnet, dass** eine Vermittlungszentrale ein Auswertungsmodul zur Auswertung von biometrischen Daten und/oder Umgebungsdaten und ein Parametermodul zur Anpassung von mindestens einem Dienstparameter des Dienstes umfasst.

## Claims

1. Method for the automatic adaptation of at least one service parameter (D11...D1k, Dm1...Dml) of a service that is offered in a telecommunications network (2) by a service centre (DZ1, DZm) connected to this telecommunications network and is selected and used by subscribers in this telecommunications network, **characterised**
**in that** by means of sensors (S11...S1i, Sn1...Snj) biometric data and/or environmental data of a subscriber are determined,
**in that** said data are evaluated by means of an evaluation module, and
**in that** the at least one service parameter of the service is adapted based on the data of the evaluation module.

2. Method according to claim 1, **characterised in that** said data are evaluated by an evaluation module of a telecommunications terminal (K1, Kn) and **in that** a parameter module of the telecommunications terminal adapts the at least one service parameter of the service based on data of the evaluation module.

3. Method according to one of the claims 1 to 2, **characterised in that** said data are evaluated by an evaluation module of a service centre and **in that** a parameter module of the service centre adapts the at least one service parameter of the service based on data of the evaluation module.

4. Method according to one of the claims 1 to 3, **characterised in that** said data are evaluated by an evaluation module of a switching centre and **in that** a parameter module of the switching centre adapts the at least one service parameter of the service based on data of the evaluation module.

5. Method according to one of the claims 1 to 4, **characterised in that** determined by the service parameter is/are a definable specialist or group of specialists and/or a definable service priority or definable service costs and/or a definable service quality.

6. Method according to one of the claims 1 to 5, **characterised in that** biometric data are determined relating to electromagnectic bodily fields and/or relating to biochemical composition of substances of the bodily skin surface and/or relating to biochemical composition of bodily fluids and/or relating to the activity of bodily organs.

7. Method according to one of the claims 1 to 6, **characterised in that** environmental data are determined relating to ambient temperature and/or relating to chemical composition of the ambient air and/or relating to the ambient air pressure and/or relating to the environmental location and/or relating to sound waves in the environment and/or relating to light waves in the environment.

8. Method according to one of the claims 1 to 7, **characterised in that** biometric data and/or environmental data are determined at definable points in time and/or after expiration of definable time intervals.

9. Telecommunications system for automatic adaptation of at least one service parameter (D11...D1k, Dm1...Dml) of a service, a service being offered in a telecommunications network (2) by a service centre (DZ1, DZm) connected to this telecommunications network and being selected and used by subscribers in this telecommunications network by means of a telecommunications terminal, **characterised**
**in that** sensors (S11...S1i, Sn1...Snj) are assigned to the telecommunications terminal for determination of biometric data and/or environmental data of a subscriber,
**in that** the telecommunications system comprises an evaluation module for evaluation of the said data, and
**in that** the telecommunications system comprises a parameter module for adaptation of at least one service parameter (D11...D1k, Dm1...Dml) of the service.

10. Telecommunications system according to claim 9, **characterised in that** a telecommunications terminal comprises an evaluation module for evaluation of biometric data and/or environmental data and a parameter module for adaptation of at least one service parameter of the service.

11. Telecommunications system according to one of the claims 9 to 10, **characterised in that** a service centre comprises an evaluation module for evaluation of biometric data and/or environmental data and a parameter module for adaptation of at least one service parameter of the service.

12. Telecommunications system according to one of the claims 9 to 11, **characterised in that** a switching centre comprises an evaluation module for evaluation of biometric data and/or environmental data and a parameter module for adaptation of at least one service parameter of the service.

## Revendications

1. Procédé pour l'adaptation automatique d'au moins un paramètre de service (D11...D1k, Dm1...Dml) d'un service qui est offert dans un réseau de télécommunications (2) par une centrale de service (DZ1, DZm) connecté à ce réseau de télécommunications et qui est choisi et utilisé par des abonnés dans ce réseau de télécommunications, **caractérisé**
**en ce que** des données biométriques et/ou des données environnementales d'un abonné sont déterminées au moyen de capteurs (S11...S1i, Sn1...Snj),
**en ce que** lesdites données sont évaluées au moyen d'un module d'évaluation, et
**en ce qu'**au moins un paramètre de service du service est adapté sur la base des données du module d'évaluation.

2. Procédé selon la revendication 1, **caractérisé en ce que** lesdites données sont évaluées par un module d'évaluation d'un terminal de télécommunications (K1, Kn) et **en ce qu'**un module de paramètre du terminal de télécommunications adapte le au moins un paramètre de service du service basé sur les données du module d'évaluation.

3. Procédé selon l'une quelconque des revendications 1 à 2, **caractérisé en ce que** lesdites données sont évaluées par un module d'évaluation d'une centrale de service et **en ce qu'**un module de paramètre de la centrale de service adapte le au moins un paramètre de service du service sur la base des données du module d'évaluation.

4. Procédé selon l'une quelconque des revendications 1 à 3, **caractérisé en ce que** lesdites données sont évaluées par un module d'évaluation d'une centrale de commutation et **en ce qu'**un module de paramètre de la centrale de commutation adapte le au moins un paramètre de service du service sur la base des données du module d'évaluation.

5. Procédé selon l'une quelconque des revendications 1 à 4, **caractérisé en ce qu'**un spécialiste déterminable ou un groupe de spécialistes et/ou une priorité de service déterminable ou des coûts de service déterminables et/ou une qualité de service déterminable est/sont déterminés par le paramètre de service.

6. Procédé selon l'une quelconque des revendications 1 à 5, **caractérisé en ce que** les données biométriques sont déterminées par rapport aux champs magnétiques corporels et/ou par rapport à la composition biochimique de substances de la surface de peau corporelle et/ou par rapport à la composition biochimique de liquides corporels et/ou par rapport à l'activité d'organes du corps.

7. Procédé selon l'une quelconque des revendications 1 à 6, **caractérisé en ce que** les données environnementales sont déterminées par rapport à la température ambiante et/ou par rapport à la composition chimique de l'air ambiant et/ou par rapport à la pression de l'air ambiant et/ou par rapport à l'emplacement environnemental et/ou par rapport aux ondes sonores de l'environnement et/ou par rapport aux ondes de lumière de l'environnement.

8. Procédé selon l'une quelconque des revendications 1 à 7, **caractérisé en ce que** les données biométriques et/ou les données environnementales sont déterminées à des points définissables dans le temps et/ou après l'expiration d'intervalles de temps déterminables.

9. Système de télécommunications pour l'adaptation automatique d'au moins un paramètre de service (D11...D1k, Dm1...Dml) d'un service, un service étant offert dans un réseau de télécommunications (2) par une centrale de service (DZ1, DZm) connectée à ce réseau de télécommunications (2) et étant choisi et utilisé par des abonnés dans ce réseau de télécommunications (2) au moyen d'un terminal de télécommunications, **caractérisé**
**en ce que** les capteurs (S11...S1i, Sn1...Snj) sont assignés au terminal de télécommunications pour déterminer les données biométriques et/ou les données environnementales d'un abonné,
**en ce que** le système de télécommunications comprend un module d'évaluation pour évaluer lesdites données, et
**en ce que** le système de télécommunications comprend un module de paramètre pour adapter au moins un paramètre de service (D11...D1k, Dm1...Dml) du service.

10. Système de télécommunications selon la revendication 9, **caractérisé en ce qu'**un terminal de télécommunications comprend un module d'évaluation pour évaluer des données biométriques et/ou des données environnementales et un module de paramètre pour adapter au moins un paramètre de service du service.

11. Système de télécommunications selon l'une quelconque des revendications 9 à 10, **caractérisé en ce qu'**une centrale de service comprend un module d'évaluation pour évaluer les données biométriques et/ou les données environnementales et un module de paramètre pour adapter au moins un paramètre de service du service.

12. Système de télécommunications selon l'une quelconque des revendications 9 à 11, **caractérisé en ce qu'**une centrale de commutation comprend un module d'évaluation pour évaluer les données biométriques et/ou les données environnementales et un module de paramètre pour adapter au moins un paramètre de service du service.
